Europäisches Patentamt

European Patent Office

Office européen des brevets

(11) Numéro de publication: **0 228 736**
**A1**

## (12) DEMANDE DE BREVET EUROPEEN

(21) Numéro de dépôt: **86202189.6**

(22) Date de dépôt: **05.12.86**

(51) Int. Cl.⁴: **B 65 G 47/14**

(30) Priorité: **17.12.85 FR 8518676**

(43) Date de publication de la demande:
**15.07.87 Bulletin 87/29**

(84) Etats contractants désignés:
**AT BE CH DE ES GB IT LI NL SE**

(71) Demandeur: **N.V. Philips' Gloeilampenfabrieken**
**Groenewoudseweg 1**
**NL-5621 BA Eindhoven(NL)**

(72) Inventeur: **Dupuis, Claude Société Civile S.P.I.D.**
**209, rue de l'Université**
**F-75007 Paris(FR)**

(74) Mandataire: **Caron, Jean et al,**
**SOCIETE CIVILE S.P.I.D. 209, rue de l'Université**
**F-75007 Paris(FR)**

(54) Dispositif pour le rangement automatique de corps de forme semblable.

(57) Dispositif (3) pour le rangement automatique de corps anguleux (a,b,c...g) semblables comprenant un moyen d'alimentation (2,4) qui amène les corps (a,b,c...g) en vrac, un tambour (8)(24), et un moyen d'extraction (6) des corps (a,b,c...g), tambour (8)(24) possédant une inclinaison déter- minée par rapport à un plan horizontal et entrainant à rotation (20, 18,19) les corps anguleux, la section globalement circu- laire du tambour (8)(24) pouvant avoir un rayon interne var- iant $(r_1, r_2)$ de façon discrète pour former des rainures d'entraînement (22)(25).

FIG.1

EP 0 228 736 A1

Croydon Printing Company Ltd.

# DISPOSITIF POUR LE RANGEMENT AUTOMATIQUE DE CORPS DE FORME SEMBLABLE

L'invention concerne un dispositif pour le rangement automatique de corps de forme semblable comprenant un moyen d'alimentation qui amène les corps en vrac, un tambour de mise en rang des corps, tournant autour de son axe et un moyen d'extraction des corps.

Un tel dispositif est connu du brevet français n° 2 456 060. Ce brevet décrit un dispositif de distribution automatique et orientée de corps, en particulier de corps ayant une forme de volume de révolution, dont les moyens d'orientation et d'entrainement sont composés d'une part, d'un tambour rotatif cylindrique horizontal dans lequel sont aménagées des alvéoles correspondant à l'empreinte du corps à orienter et d'autre part, d'un tapis roulant horizontalement, le sens de roulement étant parallèle à l'axe longitudinal du tambour.

Les corps contenus dans le tambour s'orientent d'eux mêmes en tombant au hasard dans les alvéoles, ils sont ensuite entrainés sur la périphérie du tambour et placés par effet de gravité sur le tapis roulant d'extraction.

Ce type de dispositif convient pour des corps creux tels que bouteilles, flacons mais n'est pas adapté pour le rangement automatique de corps de forme particulière dissymétrique.

De plus, le système à l'inconvénient d'être complexe, utilisant au moins deux moteurs entrainant de façon indépendante le tambour d'orientation et le moyen d'extraction des corps.

L'invention a pour but de réaliser un dispositif pour le rangement automatique, de conception simple, économique et permettant le rangement de corps anguleux comme par exemple des corps en forme de secteur de cylindre, possédant une face de base convexe et notamment des secteurs de ferrite utilisés dans l'industrie pour faire des aimants de moteurs électriques.

Dans un autre exemple le dispositif permet de séparer, orienter et aligner des pièces telles que des maillons de chaine.

Le dispositif selon l'invention est caractérisé en ce que la mise en rang et l'extraction des corps sont obtenues par un tambour de section globalement circulaire possédant d'une part, une déclivité déterminée par rapport à un plan horizontal et d'autre part, au moins un moyen d'entraînement des corps dans un sens sensiblement perpendiculaire au sens de la pente. La rotation du tambour permet le brassage et l'entraînement dans toutes positions des différents corps anguleux jusqu'à ce que ceux-ci trouvent une orientation déterminée, non influencée par la rotation. L'inclinaison permet, par glissement, aux corps anguleux entrant par l'extrémité haute, de se déplacer vers la partie basse et d'être ainsi extraits par déversement. L'entrainement des corps dans un sens perpendiculaire au sens de la pente peut être obtenu par des forces de frottement desdits corps en appui sur les parois internes du tambour.

Dans une forme préférentielle de l'invention l'entraînement des corps dans le sens perpendiculaire au sens de la pente est obtenu par un tambour dont la section circulaire a un rayon qui varie de façon discrète en au moins un point de sa circonférence. Le rayon qui varie de façon discrète permet de réaliser des crans, sur lesquels viennent buter les angles des corps à déplacer, obligeant les corps mal rangés à suivre le mouvement de rotation de l'enceinte et à se poser par exemple sur leur face convexe. Lorsque les corps sont rangés, la face convexe n'est pas influencée par les crans. Les corps glissent alors jusqu'à l'extrémité basse du tambour.

Particulièrement la variation discrète du rayon de la section du tambour est réalisée sous la forme d'une rainure sensiblement longitudinale. Une telle rainure peut avoir par exemple toute forme en creux pour donner au tambour, avec plusieurs rainures successives, une section interne cannelée.

Préférentiellement, la rainure est réalisée sous la forme d'une fente qui traverse complètement la paroi du tambour. Cette forme de réalisation est mécaniquement la plus facile à réaliser, et elle a l'avantage de permettre l'évacuation d'éventuels débris.

Avantageusement la fente est réalisée seulement sur une partie de la longueur du tambour. Ceci permet d'obtenir un tambour d'une seule pièce, alors qu'avec des fentes sur toute la longueur, le tambour serait subdivisé en morceaux et il faudrait prévoir des moyens spéciaux pour les assembler.

Dans une forme particulière de l'invention, à la sortie du tambour est disposé un convoyeur de réception des corps constitué par au moins deux glissières parallèles laissant un vide entre elles. Les corps rangés glissent sur les deux glissières. Les corps cassés de dimensions réduites ne peuvent pas prendre appui simultanément sur les deux glissières, ils tombent alors et sont éliminés.

La description ci-après, en se référant aux dessins annexés, le tout donné à titre d'exemple non limitatif, fera bien comprendre comment l'invention peut être réalisée.

La figure 1 est une vue d'ensemble des principaux éléments d'un dispositif pour le rangement automatique de corps.

La figure 2 montre schématiquement une coupe d'un tambour.

La figure 3 montre en perspective et partiellement en coupe une partie du tambour et le processus de rangement des corps anguleux.

La figure 4 montre une forme particulière du tambour.

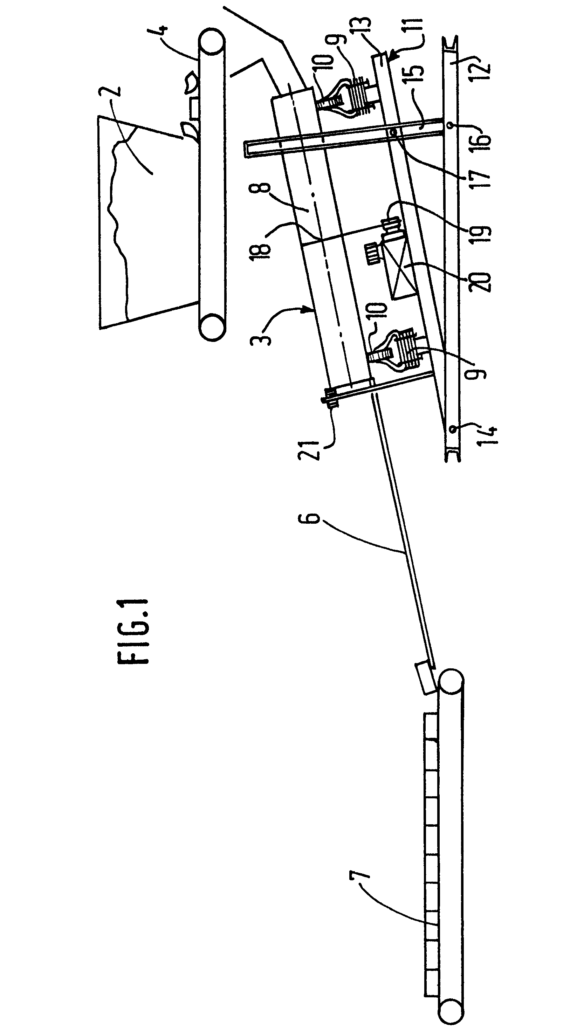

Le dispositif pour le rangement automatique de corps semblable, selon la figure 1, se compose d'une trémie 2 dans laquelle les corps à orienter sont chargés pêle mêle, d'un tambour 3 placé plus bas que la trémie, d'un déversoir 4 situé entre la trémie 2 et le tambour 3 pour alimenter ce dernier en corps à orienter, d'un convoyeur de réception 6 permettant le transport par exemple par vibration des corps orientés et enfin d'un convoyeur de distribution 7 desdits corps, vers un poste de travail. Le tambour 3 de rangement des corps arrivant de la trémie 2 et du déversoir 4, dans l'exemple de réalisation préféré de l'invention est un tube 8 cylindrique posé sur une série de patins 9 pour être entraîné à rotation autour de son axe longitudinal. Chacun des patins est muni d'au moins deux roulettes 10 dont les axes de rotation sont parallèles à l'axe longitudinal du tube 8. Dans le plan de rotation des roulettes alors perpendiculaire à l'axe longitudinal du tube 8, ledit tube 8 prend appui sur un point de chacune des deux roulettes, les deux points d'appui se trouvant alors de part et d'autre de l'axe vertical de symétrie du tube 8. Le tube 8 en appui sur deux patins est incliné par rapport à un plan horizontal. L'inclinaison du tube 8, pouvant être variable, est obtenue avec un support 11 qui forme un compas dont une branche 12 est fixée sur un plan fixe horizontal et dont l'autre branche 13 constitue un plan mobile inclinable. La branche 13, montée à rotation sur une charnière 14, à une extrémité de la branche 12, porte les deux patins 9 qui, en suivant l'inclinaison de la branche 13, donnent au tube 8 qu'ils portent la pente désirée.

La pente est alors figée par une entretoise 15 à glissière, articulée sur un axe 16 de la branche 12, entretoise bloquée par un moyen de serrage 17 quelconque. La rotation du tube 8 est obtenue à l'aide d'un entrainement par courroie 18 et poulie 19, la courroie chevauchant le tube 8. La courroie 18 et le tube 8 sont entrainés par la poulie 19 montée sur l'axe de rotation d'un moteur 20, moteur assujetti à la branche 13 inclinable du support 11.

Le tube 8 est maintenu en translation par un galet 21, dont l'axe de rotation fixé sur la branche 13 est perpendiculaire à l'axe longitudinal du tube 8. Le tube 8 vient par gravité, en glissant sur les patins 9, en appui sur le galet 21, le chemin de roulement du galet étant alors la section circulaire d'extrémité du tube 8. Pour certains corps, de masse particulière, l'orientation est obtenue par les forces de frottement des corps sur la paroi interne du tube, forces qui entrainent les corps dans un mouvement de rotation, dans un plan perpendiculaire au sens de la plus grande pente du tambour, pour que lesdits corps prennent une même position d'équilibre et d'adhérence minimale.

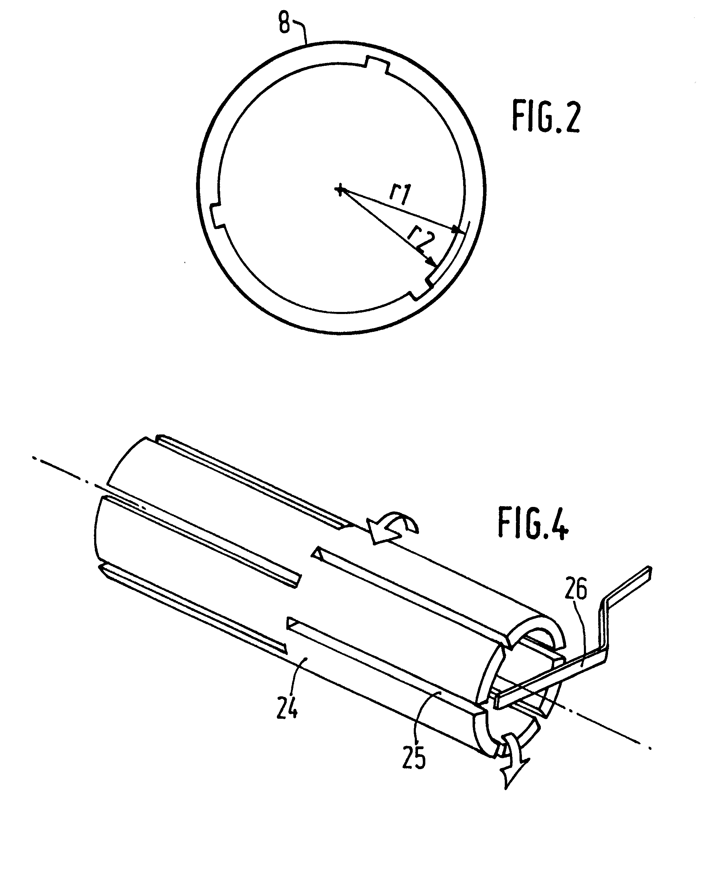

La figure 2 montre une section d'un tambour de rangement formé du tube 8 dans lequel se rangent les corps anguleux. Conformément à l'invention le rayon de la section pratiquement circulaire du tambour varie de façon discrète passant rapidement de r1 à r2 en un ou plusieurs point de la circonférence. La variation brusque du rayon de la section permet de réaliser différentes formes dont le rôle est d'entrainer les corps anguleux.

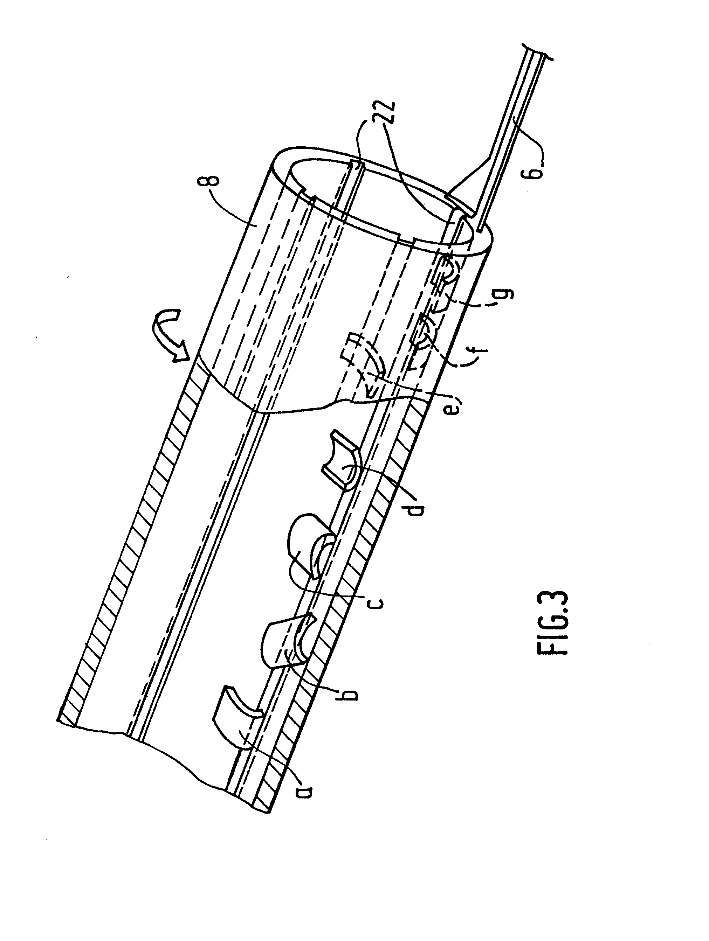

Dans l'exemple de la figure 3, la variation du rayon de la section du tambour permet de réaliser des redans 22 longitudinaux se déplaçant, lorsque l'enceinte est en rotation, de façon sensiblement perpendiculaire à la direction générale du mouvement des corps glissant le long de la pente. Les redans 22 peuvent être de forme et en nombre variable en fonction de leur technique de fabrication et aussi des corps devant être orientés.

Sur la figure 3, les redans 22 sont des rainures longitudinales. Ces rainures de section en forme de U entrainent, par accrochage, les corps anguleux dans une direction perpendiculaire au sens de la pente d'écoulement des corps à orienter. Les corps anguleux qui possèdent une face de base convexe sont versés dans le tambour de rangement et tombent dans la partie haute du tube 8. Deux situations particulières se présentent alors : lorsque des corps arrivent sur la surface interne du tube, certains prennent appui sur leur base convexe, les autres prennent appui sur leur base anguleuse. Les corps qui prennent appui sur leur base convexe en épousant la surface concave du tube glissent naturellement, dans le sens de la pente. Dans cette position, et seulement dans cette position, ils ne sont pas influencés mécaniquement par la rotation du tube car la partie convexe glisse sur les rainures, les corps suivent alors la pente du tube. Au contraire, les corps qui prennent appui sur leurs angles sont entraînés dans le mouvement de rotation du tube 8 et redescendent ensuite par gravité en glissant sur la partie cylindrique du tube, après avoir basculé dans ledit tube. Les mouvements aléatoires des corps, imposés par la rotation du tube et par l'accrochage sur les rainures, déplacent les corps jusqu'à ce qu'ils trouvent une position où leur base convexe glisse sur les rainures sans qu'ils soient alors entraînés à rotation. A la sortie du tube 8, les corps qui avaient les positions a, b, c, d de la figure 3 prennent alors les positions e, f, g, dans lesquelles la rainure est sans effet.

Dans l'exemple de la figure 3, les corps en forme de secteur alors orientés sont déversés à l'extérieur du tube et prennent appui sur deux glissières 6 parallèles, placées dans le prolongement du mouvement de translation des corps qui glissent dans le tambour. Ces glissières soumises à un mouvement de vibration permettent le déplacement des secteurs. Elles permettent aussi d'éliminer les secteurs brisés qui, ne pouvant pas par leurs dimensions prendre appui sur les deux glissières, tombent dans un bac de rebut dès leur sortie du tube.

L'efficacité de rangement du tube est liée à son diamètre et à la dimension des secteurs à ranger. Cette efficacité possède un optimum lorsque le tube a une inclinaison d'environ 20° qu'il tourne à environ 1 tour par seconde et que son rayon interne est sensiblement le double du rayon moyen de la face convexe des secteurs.

La figure 4 montre une forme particulière du tambour de rangement. Le tambour 24 est formé d'un tube dont les rainures 25 réalisées sous la forme de fentes traversent totalement sa paroi. Les fentes sont usinées longitudinalement sur une partie seulement de la longueur du tube de façon à ce que celui-ci constitue une seule pièce mécaniquement rigide.

Les secteurs de cylindre représentés sur la figure 3 ont une surface d'appui convexe mais bien d'autres formes peuvent être rangées avec ce dispositif comme par exemple les formes sphériques tronquées. Ce dispositif peut même s'appliquer à des corps cubiques ou parallélépipédiques ou encore des cylindres plats avec un effet alors limité à un rangement en ligne à partir d'une arrivée en vrac. Dans le cas de corps cylindriques, il est nécessaire de prévoir une butée 26, à l'intérieur ou à la sortie du tambour, qui permet seulement le passage des pièces lorsque celles-ci sont positionnées à plat, cela afin d'éviter que ces pièces roulent directement sur la pente du tube vers la sortie.

D'autres formes de réalisation de l'invention peuvent être envisagées. Le tambour peut former par exemple un tronc de cône creux à axe longitudinal horizontal; les rainures peuvent être remplacées par exemple par une répartition de petites saillies en forme de verrues.

REVENDICATIONS :

1.          Dispositif pour le rangement automatique de corps de forme identique comprenant un moyen d'alimentation qui amène les corps en vrac, un tambour de mise en rang des corps, tournant autour de son axe et un moyen d'extraction des corps, la mise en rang et l'extraction des corps étant obtenues d'une part par un tambour de section globalement circulaire possèdant, une déclivité déterminée par rapport à un plan horizontal, et d'autre part, au moins un moyen d'entraînement des corps dans un sens sensiblement perpendiculaire au sens de la pente, constitué par au moins une rainure sensiblement longitudinale, caractérisé en ce que la nainure est réalisée sous la forme d'une fente qui traverse complètement la paroi du tambour.

2.          Dispositif selon la revendication 1, caractérisé en ce que la fente est réalisée seulement sur une partie de la longueur du tambour.

3.          Dispositif selon l'une quelconque des revendications précédentes caractérisé en ce qu'à la sortie du tambour est disposé un convoyeur de réception des corps constitué par au moins deux glissières parallèles laissant un vide entre elles.

FIG.1

0228736

0228736

8

FIG.2

r1

r2

FIG.4

26

24

25

0228736

FIG.3

Office européen
des brevets

**RAPPORT DE RECHERCHE EUROPEENNE**

**0228736**
Numéro de la demande

EP  86 20 2189

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| Y | US-A-2 254 401 (F.L. STOFFEL)<br>* Page 1, colonne 1, ligne 25 - colonne 2, ligne 35; figures 2-4 * | 1 | B 65 G  47/14 |
| Y | DE-A-2 426 858 (R. STEIMEL)<br>* Page 9, lignes 2-10; figures * | 1 | |
| Y | GB-A- 485 159 (C.E. EVERY-CLAYTON)<br>* Page 3, lignes 34-49; figures 5,7 * | 1 | |
| A | | 2 | |
| A | US-A-3 063 543 (L. SCHNEIDER)<br>* Colonne 2, lignes 18-35; figure 1 * | 3 | DOMAINES TECHNIQUES RECHERCHES (Int. Cl.4)<br><br>B 65 G<br>B 23 Q<br>B 07 C |

Le présent rapport de recherche a été établi pour toutes les revendications

| Lieu de la recherche | Date d'achèvement de la recherche | Examinateur |
|---|---|---|
| LA HAYE | 30-03-1987 | VAN ROLLEGHEM F.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03 82